# EUROPEAN PATENT SPECIFICATION

(11) **EP 3 291 953 B1**
(45) Date of publication and mention of the grant of the patent: **02.10.2019**
(21) Application number: 16729974.2
(22) Date of filing: 05.05.2016
(51) Int. Cl.: B29B 17/00, B09B 3/00, E02D 31/00, E04B 1/00

(54) **METHOD AND APPARATUS FOR MAKING SUBSTANTIALLY PARALLELEPIPED FORMWORK MODULES FOR CONSTRUCTING BUILDINGS, RESTRAINING WALLS, EMBANKMENTS, DYKES, ANTI-EROSION AND ANTI-SEISMIC FOUNDATIONS STARTING FROM OUT-OF-USE TIRES, AND RELATED FORMWORK MODULE**
VERFAHREN UND VORRICHTUNG ZUR HERSTELLUNG VON IM WESENTLICHEN QUADERFÖRMIGEN SCHALUNGSMODULEN ZUR ERRICHTUNG VON GEBÄUDEN, RÜCKHALTEWÄNDEN, BÖSCHUNGEN, DEICHEN, EROSIONSBESTÄNDIGEN UND ERDBEBENSICHEREN FUNDAMENTEN AUSGEHEND VON ALTREIFEN UND ZUGEHÖRIGES SCHALUNGSMODUL
PROCÉDÉ ET APPAREIL POUR LA FABRICATION DE MODULES DE COFFRAGE SENSIBLEMENT PARALLÉLÉPIPÉDIQUES DESTINÉS À LA CONSTRUCTION DE BÂTIMENTS, PAROIS DE RETENUE, REMBLAIS, DIGUES, FONDATIONS ANTI-ÉROSION ET ANTI-SISMIQUES, À PARTIR DE PNEUS USAGÉS, ET MODULE DE COFFRAGE ASSOCIÉ

(30) Priority: 06.05.2015 IT MI20150640
(43) Date of publication of application: 14.03.2018
(73) Proprietor: Cartasegna, Stefano, 15057 Tortona (AL) (IT)
(72) Inventor: Cartasegna, Stefano, 15057 Tortona (AL) (IT)
(74) Representative: Rastelli, Franco
(86) International application number: PCT/IB2016/000581
(87) International publication number: WO 2016/178075

(56) References cited:
- WO-A1-02/094559
- DE-A1- 2 603 515
- US-A- 5 013 509

## Description

### BACKGROUND OF THE INVENTION

The present invention relates to a method and apparatus for making substantially parallelepiped formwork modules for constructing buildings, restraining or cut-off walls, embankments, dykes or dams, anti-erosion and anti-seismic foundations starting from used pneumatic tires, and relates to the formwork modules made thereby.

As is known, the problem of managing waste materials in industrially advanced countries, which generate very large amounts thereof, or are subjected to an import thereof, is more and more important.

Among the industrial waste materials and/or refuse made in an enormous amounts, there are the cured or vulcanized rubber waste materials, constituted by used pneumatic tires, the so-called "PFUs", deriving both from a periodical replacement of the worn tires, and from the rubber industrial wastes, and from the recovering of used pneumatic tires.

Since the above mentioned pneumatic tires have a cross-linked structure, they are rather difficult to be properly recovered, mainly because of the operating cost related to the present recycling methods.

In fact, at present, the methods and related apparatus for recycling the PFUs provide four processing steps, that is mincing, milling, iron removing and cleaning, which steps allow to recover any materials present therein by automatically separating rubber from iron and textile fibers.

A prior process provides to freeze the pneumatic tire at at least -100°C, and then to introduce the frozen pneumatic tire into a centrifugal apparatus which subjects it to a mincing operation thereby providing particles of a particle size of about 180 microns.

The pneumatic tire powder thus achieved may be easily mixed with other materials to provide regenerated materials and mixtures to make other pneumatic tires.

An electrothermic recycling method is also known, in which the pneumatic tire is reduced to comparatively large pieces which are introduced into an electromagnetic induction oven, thereby the metal part of the tire is quickly heated and the tire rubber being carbonized by following processes is recovered to a chemical structure near to that of the starting elastomeric material.

Actually, from the regenerated used pneumatic tire grains or powders are currently made a lot of "new" products, such as, for example: shoe soles; synthetic grass; carriage wheel assemblies; paving tiles; thermally or sound insulating panels; vehicle components; outer pavings for entertainment spaces; urban furniture assemblies; road pavings, in which the regenerated mixtures provide asphalt materials having improved draining and noiseless properties.

Notwithstanding the fact that the above mentioned recovering methods allow to achieve comparatively good results, the recovering of the PFUs by reusing their components in other making processes is slow in achieving its purposes, because of the comparatively high processing costs necessary for treating the high iron content waste materials, such as the used pneumatic tires.

In the market are also commercially known the so-called "TIRE LOGS", that is pneumatic tire stubs, made by removing the side parts of the PFU and reusing, without further processings and energy use, the remaining rubber parts cut as strips, which are spirally wound about an inner core, having a variable diameter and length, and which are tensioned and fixed by fixing rivets and bolts, thereby providing, with several configurations, building modules which are flexible and strong, while having very good structural properties.

The above TIRE LOGS may be used as a building material for making structures adapted to resist against violent atmospheric events, such as earthquakes, floods and landslides, and being ideal for river embankments, dams and containment or cut-off walls, since they are adapted to absorb forces due to water flows, violent wind and snow and ice pressing forces.

The above is also a perfect solution for making structures for supporting comparatively high weights, trunks, harbor constructions, dams, as well as earthquake- and tornado-proof recovering assemblies.

In several parts of the world are also known the so-called "passive solar houses", which are made by using tires for making, by pressed sand and cement at their end portions, walls of large thickness and density, contributing to the thermal mass effect which is adapted to naturally adjust the house inner temperature, with respect to both hot and cold outer temperatures, which walls have a comparatively long life and good resilient properties, even when subjected to atmospheric events.

However, a substantial drawback of this latter structure, as well as of the above mentioned structures, is that they must be constructed in a fully manual manner, with consequent problems related to the making costs and times.

The above drawback, moreover, is further aggravated by an access to existing machines, such as bulldozers or mini-excavators, and this because of the shapes of the PFUs and their arrangement at the building places.

### SUMMARY OF THE INVENTION

Accordingly, the aim of the present invention is to provide a method adapted to transform, by a reduced number of simple operating steps and a small energy requirement, used pneumatic tires into formwork modules, for building constructions and containment or cut-off walls, embankments, dams, as well as anti-erosion and anti-seismic foundations and/or the like.

Within the scope of the above mentioned aim, a main object of the invention is to provide a method of the above indicated type, which is designed to quickly and inexpensively transform into modular formworks, preferably of a substantially parallelepiped shape, used or out-of-use pneumatic tires of nearly any size or type.

Another object of the present invention is to provide a method of the above indicated type adapted to transform used tires into modular formworks, preferably of a square cross-section parallelepiped shape, in a finished condition, which, for a use thereof, do not require to be subjected to further complex and expensive treatments to be performed in separate places and/or on distinct processing apparatus.

A further object of the present invention is to provide a method of the above indicated type, allowing to make modular formworks, in particular square or rectangular cross-section parallelepiped formworks, which are structurally very strong, and may be easily and quickly mutually associated with one another while having a very low making cost.

Yet another object of the present invention is to provide a method of the above indicated type which, besides being very efficient from an operative and energy-saving standpoint, is also minimally polluting.

Yet another object of the present invention is to provide a method of the above indicated type which may be performed on very simple and inexpensive making apparatus, of a commercially available type or which may be easily made by the industry of this field.

According to one aspect of the present invention, the above mentioned aim and objects, as well as yet other objects which will become more apparent hereinafter, are achieved by a method for making substantially parallelepiped formwork modules, for building constructions, cut-off or containment walls, embankments, dams, anti-erosion and anti-seismic foundations and/or the like, starting from used pneumatic tires, having the characterizing features of claim 1.

The above mentioned aim and objects are also achieved by an apparatus having the characterizing features of claim 6.

The above mentioned aim and objects are also achieved by a formwork structure having the characterizing features of claim 9.

### BRIEF DESCRIPTION OF THE DRAWINGS

Further characteristics and advantages of the method, apparatus and formwork structure according to the present invention will become more apparent hereinafter from the following detailed disclosure of currently preferred embodiments of the invention, which are illustrated by way of an indicative but not limitative example in the accompanying drawings, where:
Figure 1 is a schematic top view of a used pneumatic tire to be subjected to the method for transforming it into a formwork, according to the present invention;
Figure 2 is a further schematic top view of a possible configuration of the basket or drum of an apparatus for performing the main operating steps of the inventive method;
Figure 3 is yet another schematic view showing the pneumatic tire mounted on the pneumatic support drum structure of Figure 2;
Figure 4 schematically shows a pressing of the used tire edges of Figure 1;
Figure 5 is a further schematic view showing a pressing of the tire also at its corner portions, in a substantially squared configuration;
Figure 6 is yet a further schematic view showing another operating step of the method according to the present invention, immediately following the operating step shown in Figure 5;
Figure 7 shows yet another operating step of the method according to the present invention, immediately following the operating step of Figure 6;
Figure 8 shows the pneumatic tire substantially fully transformed into a formwork;
Figures 9 and 10 are detail views, showing locking means to be associated to the formwork thus made in order to lock hollow rib portions of said formwork, and to favor a stacking or piling up of a like formwork on the previously produced formwork;
Figure 11 shows yet another operating step of the method, in which the fully formed formwork of Figure 7 is introduced into a cooking oven;
Figure 12 shows a further schematic view of the formwork exiting the cooking oven;
Figure 13 shows a schematic top view of the formwork thus made, locked in its shape and being cooled, with means for favoring a stacking of a further formwork thereon according to the present invention;
Figure 14 is a schematic perspective view of the formwork thus made, in a substantially rigid stabilized shape;
Figure 15 is an exploded view showing a manner for overlapping or stacking two substantially identical formworks, made by the method according to the present invention;
Figure 16 shows the two formworks as arranged onto one another and removably locked to one another; and
Figure 17 shows a schematic perspective view of a possible application of a plurality of formworks of the present invention, as suitably stacked onto one another and being operatively connected to form, for example, a containment embankment.

### DESCRIPTION OF THE PREFERRED EMBODIMENTS

With reference to the above mentioned figures, is herein shown a preferred embodiment of the method and apparatus and related formwork according to the teachings of present invention.

On the other hand, it should be apparent that this embodiment, which will be disclosed in a detailed manner hereinafter, is susceptible to several modifications and variations all coming within the scope of the inventive idea.

In particular, the apparatus shown by way of an example in the accompanying drawings may be easily modified to make formworks on an industrial making scale, that is by using or suitably modifying the several means schematically shown in the accompanying drawings, which will be disclosed, as stated, by way of an indicative but not limitative example only.

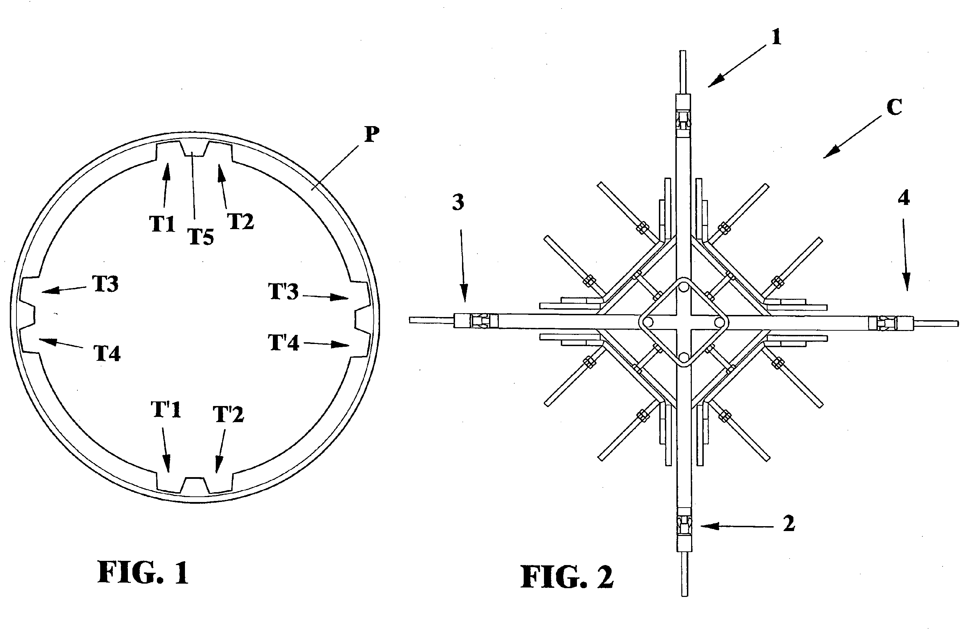

In Figure 1, the pneumatic tire P is schematically shown by a top plan view.

In this connection, it should be apparent that the used pneumatic tire to be processed by the present invention could have a size ranging within a conventional size range of motor vehicle used pneumatic tires, which at present constitute, as previously mentioned, an enormous waste material mass.

Reverting to the above mentioned figures, as a starting step of the inventive method, on the pneumatic tire P walls are formed suitable pairs of cuts, for example constituted by generally trapezoidal cut-outs T1 and T2 and T'1 and T'2, diametrically vertically opposite with respect to one another; as well as further horizontal cut-outs, also diametrically opposite to one another and also having a substantially trapezoidal configuration, T3 and T4 and T'3, T'4.

As shown, between each pair of cut-outs T1 and T2 is provided a solid portion, of which only the rib T5 has been indicated.

Corresponding solid portions are also defined, with the disclosed cut-out configuration, between the other pairs of trapezoidal cut-outs.

This first operating method step, that is a performing of cut-outs through the pneumatic walls, may be preferably made even away from the plant in which are performed the other method steps, for example at the used pneumatic tire source, such as at the pneumatic tire dealers or makers.

Thus, it will be possible to maximize the pneumatic tire loading capability.

From Figure 1 it should be also apparent that from the pneumatic tire P have already been removed the usual metal bead wires (not shown).

Figure 2 is a schematic view showing the basket or drum unit C supporting the pneumatic tire P, and including pressing jack elements 1, 2, 3 and 4 at the respective diametrical end portions of the body of the basket or drum C.

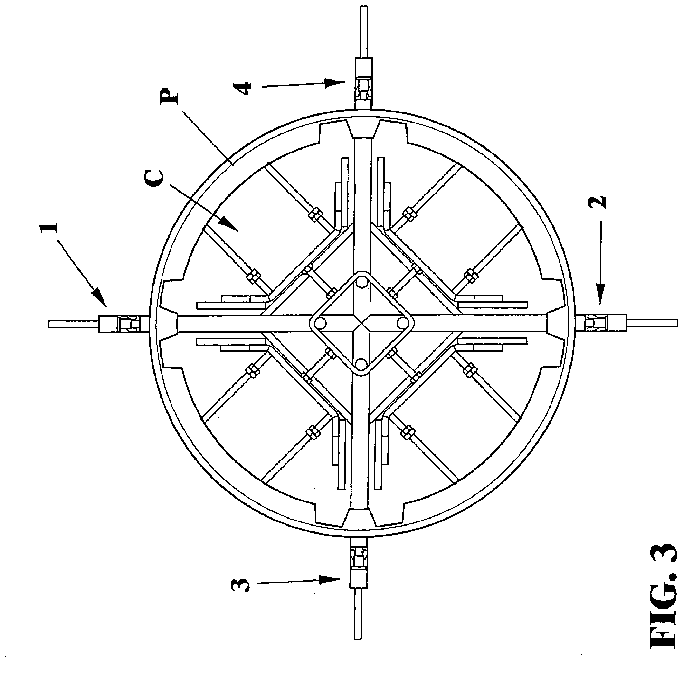

In Figure 3 the pneumatic tire P is shown in its condition mounted on the basket or drum C which, in a preferred embodiment, will have a substantially octagonal configuration.

Moreover, the invention also provides to associate with said basket C further operating means which, in addition to centering the pneumatic tire, are also adapted to perform the required measurements, for example of the pneumatic tire diameter and/or width.

In this connection it should be noted that, even if the subject apparatus is disclosed with reference to a single operating unit, it could also comprise a plurality of like on line operating units, also arranged on different operating planes, to provide a column of on line processing molds or drums.

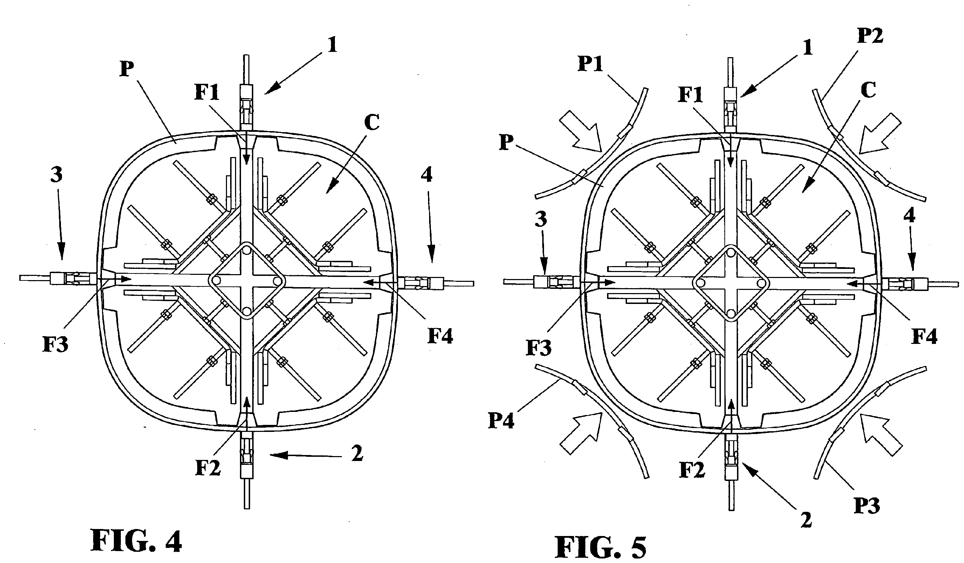

In Figure 4 the pneumatic tire P is deformed under pressure at its diametrical vertical and horizontal portions, by the above mentioned jack elements 1, 2, 3 and 4, thereby gradually transforming from its starting circular shape into its parallelepiped target shape, for example of square cross-section, as desired.

This is achieved owing to the pressure provided by the diametrical jack pressing elements 1 and 2, according to the arrows F1 and F2, on the vertical diameter, and 3 and 4, according to the arrows F3 and F4, on the horizontal diameter.

In Figure 5, the pressing method of the pneumatic tire is continued by using further substantially plate curvilinear pressing elements, indicated by P1, P2, P3 and P4, respectively (in a clockwise direction), cooperating with the diametrical pressing elements 1, 2, 3 and 4 to deform by pressure even the corners of the square shape.

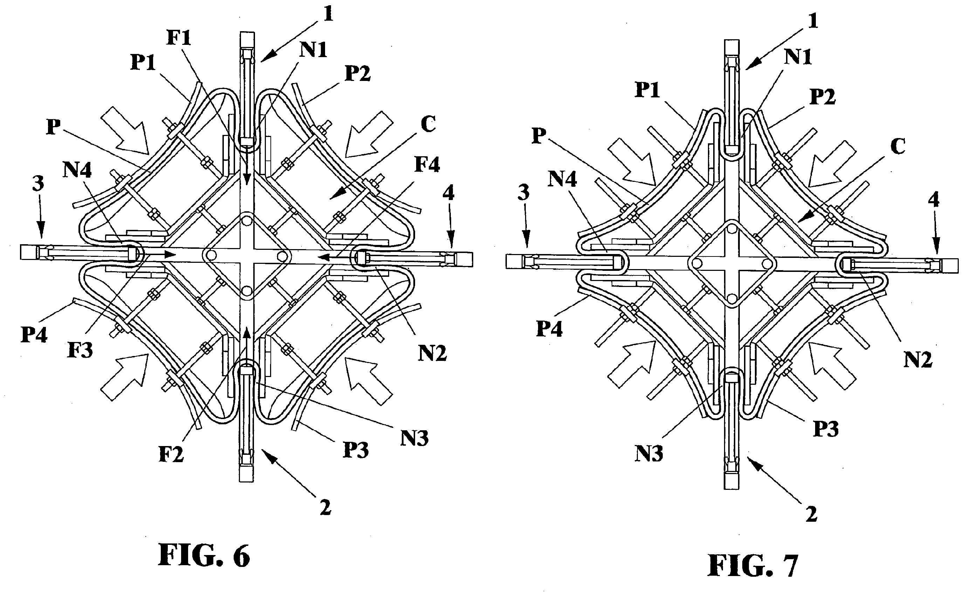

In Figure 6, with a continued operation of the diametrical pressing elements 1, 2, 3, 4 (arrows F1, F2, F3 and F4) in cooperation with the substantially curvilinear plate elements P1, P2, P3 and P4, at the pneumatic tire tread diametrical portions, the diametrical pressing elements 1, 2, 3 and 4, continuing their pressing operation, as shown by the respective arrows, will provide, by pressing toward the center of the pneumatic tire P a respective pneumatic tire tread portion, a hollow rib having a substantially U-shape cross section, substantially extending through the overall height or width of the pneumatic tire.

In Figure 7, the pneumatic tire has assumed a substantially fully pressed configuration, which may be considered as having a substantially octagonal contour or profile with four substantially curvilinear sides having a respective size larger than that of the four sides where the mentioned U hollow ribs are defined.

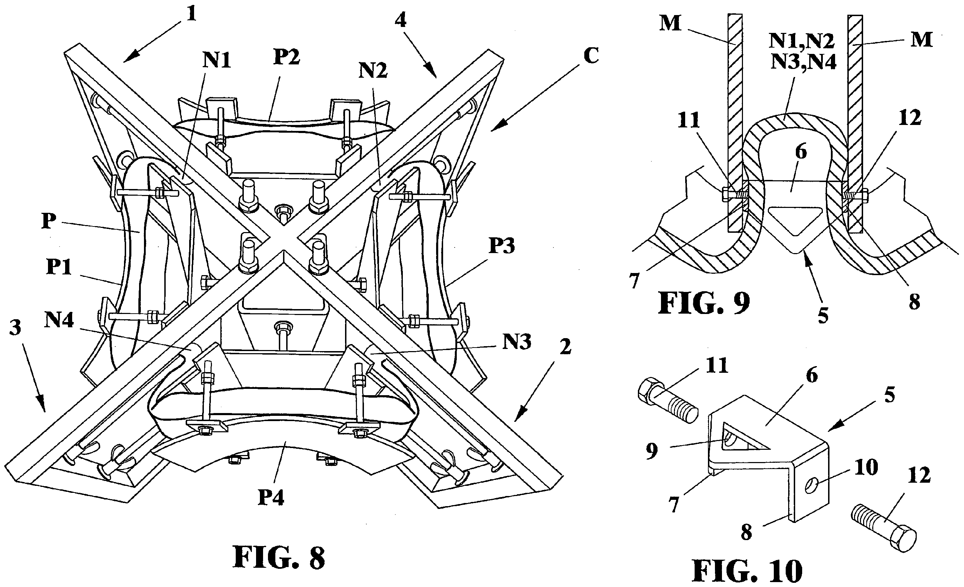

At this time, according to a main aspect of the present invention, the mentioned U rib is properly locked in its U-shape, by locking or clamping elements schematically shown in Figures 9 and 10.

More specifically, the locking element in Figure 10 comprises a small bridge bracket, generally indicated by the reference number 5, of a substantially U-shape.

Such a U-shape comprise a plate base portion 6 and two further portions or arms 7 and 8, also of a substantially plate-like configuration, extending perpendicularly from the base portion.

The two arms 7 and 8 comprise two central holes 9 and 10, respectively, designed for receiving therethrough respective bolts 11 and 12.

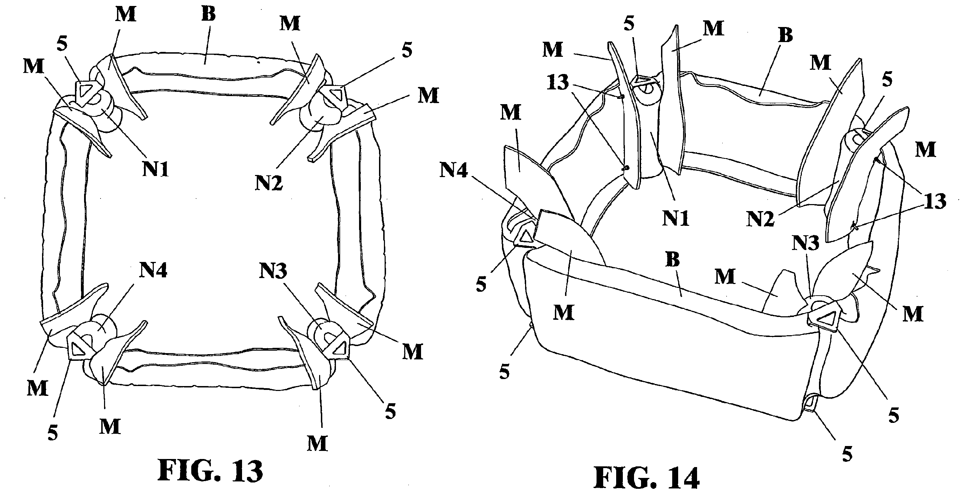

This U-shape is "locked" by the above mentioned bridge-bracket element 5 and bolts 11 and 12, in cooperation with two upright elements M, of a substantially laminar flat configuration, and clearly shown in Figures 13 and 14.

Each pair of said upright elements M abuts against a respective wall of a corresponding rib N1, N2, N3 and N4 and, together with the rib, the uprights M extend substantially through the overall width or height of the pneumatic tire.

The removable locking of the upright elements M to said hollow U ribs is made by the corresponding bracket-bridge elements 5 and respective bolts 11 and 12 in turn locket by the respective nuts 13 (see Figure 14).

From Figure 14 it should be apparent that the pneumatic tire has assumed the substantially parallelepiped square hollow configuration, with its respective edge B suitably inward bent.

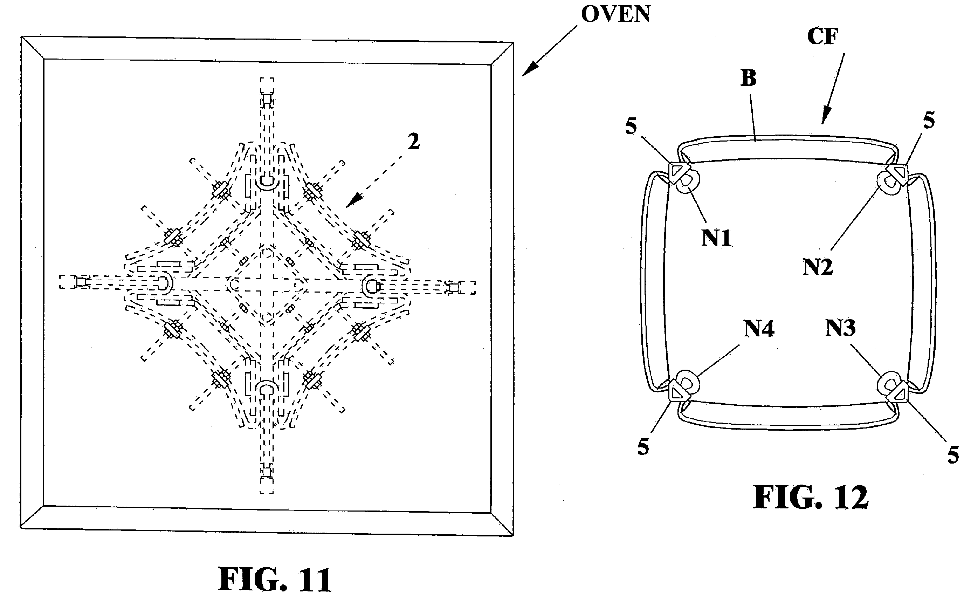

This configuration of Figure 14 being moreover already clamped or "made rigid" by cooking the pneumatic tire in a cooking oven, on its related drum C, as shown in Figure 11.

The temperature of the cooking oven, constituting an important processing parameter for processing the pneumatic tire according to the present invention, being selected by one skilled in the art depending on further related parameters, such as the pneumatic size, the type of rubber constituting the pneumatic tire, and so on.

Thus, from the preceding disclosure it should be apparent that the pneumatic tire processed by the method and apparatus according to the present invention will assume, at the end of the transforming method, the configuration shown in Figures 13 and 14, which may be considered a substantially "rigid" configuration, and this not only owing to a use of the disclosed locking elements, but also owing to the cooking operation in the cooking oven, which cooking will represent an indispensable operating step of the inventive method, as well as the following cooling step to further "fix" the end formwork shape.

In other words, the pneumatic tire, at this time, has been transformed into a substantially square cross-section parallelepiped formwork, including, at the square corners, the upright elements M locking, by pairs, each said corner rib N in cooperation with the small bridge plates 5.

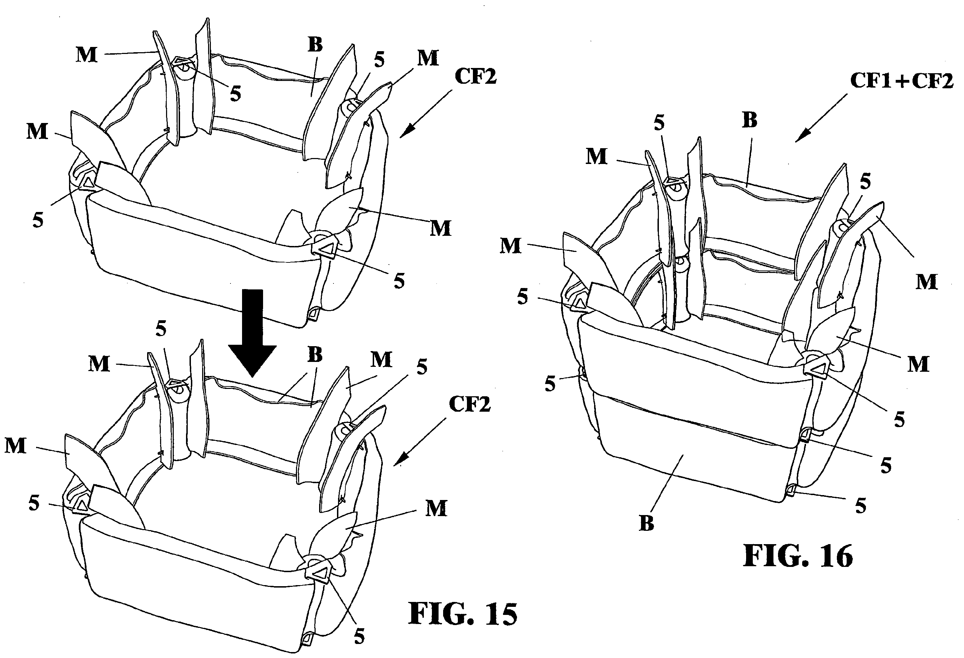

From Figure 10 it should be apparent that each said small plate 5 comprises an extension having a preferably triangular configuration of the base portion 6, integral with the base portion 6 itself, through the projecting portion of which is defined an opening, for example a triangular opening, and on which portion may bear, guided by the upright elements M, a like portion of a further like formwork which may be easily overlapped or stacked on the identical base formwork as disclosed and shown for example in the perspective view of Figure 15.

Figure 16 shows two overlapping or stacked formworks, the stacking of which is favored by the upright elements M of a pneumatic tire which may be easily and quickly threaded through threading portions of the top formwork module, the two formworks being abutted, in addition to their edges B substantially bent to a flat status, even on the small bridge plates 5, more specifically on their extension portions, thereby the triangular openings will facilitate a further stabilizing locking of the two substantially square formworks being stacked and bound, or connected, for example, by a simple connecting metal wire or band passing through the mentioned openings.

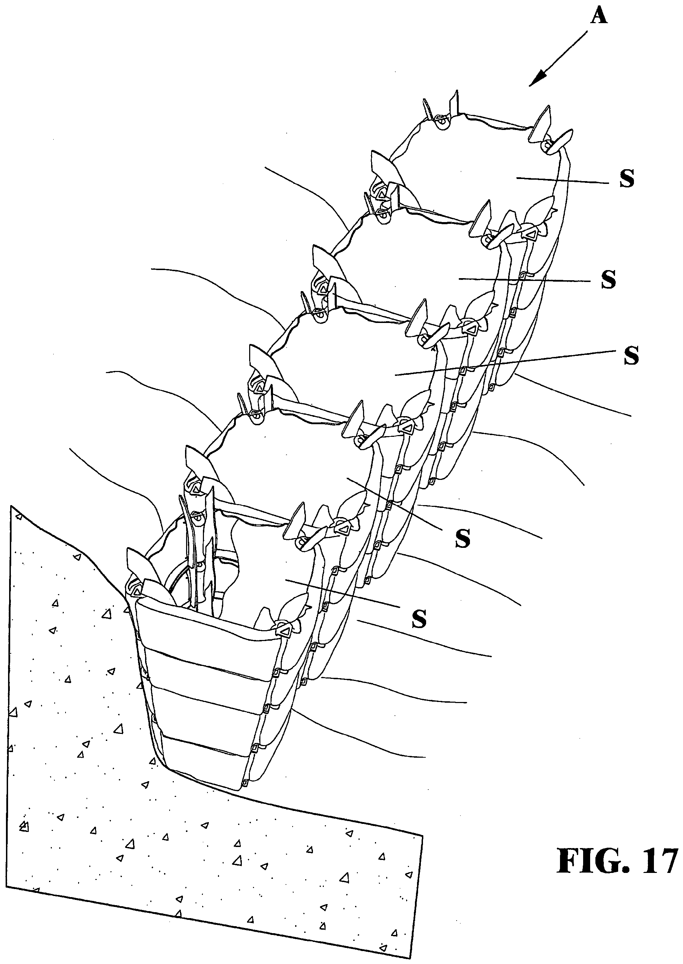

Figure 17 shows a possible stacked and juxtaposed arrangement of a plurality of inventive formworks, to make an embankment generally indicated by the reference letter A, which is constructed by stacking the mentioned plurality of square cross-section formworks, as suitably filled-in by an inert material, preferably sand S or mortar material, or a concrete material and/or like inert material of a high weight.

One skilled in the art will easily understand that the making of the embanking A may be achieved in a very simple, quick and also automatic manner, owing to the facility with which the single formwork modules may be mutually automatically coupled and filled-in by the mentioned inert material S.

From the above disclosure it should be apparent that the invention fully achieves the intended aim and objects.

Although the invention has been disclosed with reference to a currently preferred embodiment thereof, the disclosed embodiment is susceptible to several modifications and variations, all coming within the scope of the invention.

In particular, the inventive method could be automated and controlled by an electronic processor, and the apparatus for carrying out the method may be designed with different configurations and could also comprise packaging means, for suitably packing the made formworks, and all coming within the scope of the inventive teachings.

## Claims

1. A method for making parallelepiped square cross-section formwork modules for building constructions, cut-off walls, embankments, dams, anti-erosion and anti-seismic foundations, starting from used pneumatic tires, **characterized in that** said method comprises at least the steps of:
a) providing a used pneumatic tire (P) deriving both from a periodic replacement of worn tires or from the rubber industry wastes or from the recovering of used pneumatic tires;
b) removing from said pneumatic tire (P) the two sidewall iron beads;
c) performing cuts (T1, T2, T'1, T'2, T3, T4, T'3, T'4) at diametrically opposite positions on the edges, said cuts defining cut-out regions separated by a middle solid region (T5) of the tire sidewalls;
d) removably mounting said pneumatic tire (P) on basket-drum supporting means (C);
e) pressing in diametrical directions towards a center of said pneumatic tire (P) the tread portions of said pneumatic tire near said cuts thereby causing said tire to assume a parallelepiped configuration, of a square cross-section;
f) pressing the corner regions of said square configuration toward the center of said pneumatic tire and simultaneously continuing said pressing step thereby defining, at said cuts, U-shaped hollow ribs substantially extending through the overall width of said pneumatic tire (P), from a sidewall to the other sidewall of said pneumatic tire (P);
g) providing a plurality of locking elements (5, 6, 7, 8, 9, 10, 11, 12) for locking the arms of each said U-shaped hollow rib and related connecting means;
h) providing a corresponding plurality of substantially laminar flat upright elements (M);
i) locking the arms of each said U-shaped hollow rib and simultaneously locking to each outer wall of each of said arms of the two walls of each said U-shaped hollow rib a respective pair of said upright elements (M);
l) introducing the pneumatic tire (P) having assumed said parallelepiped configuration, and supported by said supporting means (C), into a heating and/or cooking oven;
m) withdrawing the pneumatic tire (P) from said oven and cooling it to definitively fix said parallelepiped configuration.

2. A method, according to claim 1, **characterized in that** each said locking element for locking the arms of each said U-shaped hollow rib comprises a U-shape bridge metal element (5), having an integral plate base (6), with two plate arms (7, 8) extending perpendicularly from said base (5), each said arm (7, 8) having at least a throughgoing hole (9, 10), said base having a projecting flat portion therethrough is defined a respective throughgoing opening and said connecting means comprising a bolt (11, 12) each engageable in a respective hole of each said arm and having a threaded end portion for an engagement with a corresponding locking nut.

3. A method, according to claim 1, **characterized in that** each said upright element (M) is constituted by a flat laminar strip element made of a same rubber of said pneumatic tire (P) and having a height substantially greater than a width of said pneumatic tire (P), and each being adapted to be locked by respective bolts and nuts to the outer wall of each said U-shaped hollow rib.

4. A method, according to claim 1, **characterized in that** said method comprises, immediately following said cooking step I), a further step of applying to the processed sidewall of said pneumatic tire (P) a wire bead element adapted to be affixed by a respective iron wire element.

5. A method, according to any of the preceding claims, **characterized in that** said method further comprises, after said cooking step, a further bending step of bending at least the top side edge of said pneumatic tire (P).

6. An apparatus for carrying out the method according to claim 1, **characterized in that** said apparatus comprises, functionally intercoupled, a plurality of operating units each including removable supporting means for said pneumatic tire (P), adjusting and measuring means, pressing means (1, 2, 3, 4, P1, P2, P3, P4), heating and/or cooking oven means, cooling means, unloading means and packaging means for packaging the parallelepiped formwork thus made.

7. An apparatus, according to claim 6, **characterized in that** said pneumatic tire supporting means comprise a basket-drum element (C), having an octagonal configuration, with which are operatively associated centering and measuring means of said pneumatic tire and said pressing means (1, 2, 3, 4, P1, P2, P3, P4), said pressing means (1, 2, 3, 4, P1, P2, P3, P4) supported by said basket (C) being adapted to press at least four portions of said pneumatic tire tread arranged diametrically opposite by pairs.

8. An apparatus, according to claims 6 and 7, **characterized in that** said operating units are arranged and interconnected on-line and stacked thereby forming units of basket or drum columns (C) for supporting said pneumatic tires (P).

9. A formwork structure, of a square cross-section, made from a used pneumatic tire (P) by the method according to claims 1 to 5, and by the apparatus according to claims 6 to 8, **characterized in that** said formwork structure comprises a rubber formwork body being made substantially rigid and means for facilitating a stacking of a plurality of said formworks and their lockable coupling.

10. A building construction, a containment or cut-off wall, an embankment, a dam, anti-erosion and anti-seismic foundations, each including a plurality of formwork structures, according to claim 9, being operatively intercoupled to one another and filled-in by an inert material of a high weight.

## Patentansprüche

1. Verfahren zur Herstellung von Parallelepipeden Schalungsmodulen mit quadratischem Querschnitt für Baukonstruktionen, Abschnittswände, Böschungen, Dämme, erosionsbeständigen und erdbebensicheren Fundamenten, ausgehend von gebrauchten Luftreifen, **dadurch gekennzeichnet, dass** das Verfahren mindestens die Schritte umfasst:
a) Bereitstellung eines gebrauchten Luftreifens (P), der aus einem regelmäßigen Austausch abgenutzter Reifen oder aus den Gummiindustrieabfällen oder aus der Rückgewinnung gebrauchter Luftreifen stammt;
b) Entfernung der beiden Eisenwülste in den Seitenwänden des Luftreifens (P);
c) Vornahme von Schnitten (T1, T2, T'1, T'2, T3, T4, T'3, T'4) an diametral gegenüberliegenden Positionen an den Kanten, wobei die Schnitte Ausschnittsregionen definieren, die durch eine mittlere feste Region (T5) der Reifenseitenwände getrennt sind;
d) Entfernbare Montage des Luftreifens (P) auf Korbtrommelträgermitteln (C);
e) Einpressen der Laufflächenabschnitte des Luftreifens in der Nähe der Schnitte in diametraler Richtung zu einer Mitte des Luftreifens (P) hin, wodurch der Reifen eine Parallelepipedkonfiguration mit einem quadratischen Querschnitt annimmt;
f) Pressen der Eckregionen der quadratischen Konfiguration zu der Mitte des Luftreifens hin und gleichzeitiges Fortführen des Presschritts zum Definieren von U-förmigen hohlen Rippen an den Schnitten, die sich im Wesentlichen von einer Seitenwand zur anderen Seitenwand des Luftreifens (P) durch den gesamten Luftreifen (P) erstrecken;
g) Bereitstellung mehrerer Verriegelungselemente (5, 6, 7, 8, 9, 10, 11, 12) zum Verriegeln der Arme, die die Arme jeder der U-förmigen hohlen Rippen und entsprechender Verbindungsmittel verriegeln;
h) Bereitstellen von entsprechenden mehreren im Wesentlichen laminaren flach aufrechten Elementen (M) ;
i) Verriegeln der Arme jeder der U-förmigen hohlen Rippen und gleichzeitiges Verriegeln eines jeweiligen Paars der aufrechten Elemente (M) an jeder Außenwand jedes der Arme jeder der U-förmigen hohlen Rippen;
l) Einführung des Luftreifens (P) nach Annehme der Parallelepipedkonfiguration und unterstützt durch das Unterstützungsmittel (C) in einen Heiz- und/oder Kochofen;
m) Entnahme des Luftreifens (P) aus dem Ofen und Abkühlung, um die Parallelepipedkonfiguration definitiv zu fixieren.

2. Verfahren nach Anspruch 1, **dadurch gekennzeichnet, dass** das Verriegelungselement zum Verriegeln der Arme jeder der U-förmigen hohlen Rippen ein U-förmiges Brückenmetallelement (5) umfasst, das eine integrale Grundplatte (6) aufweist, wobei sich zwei Plattenarme (7, 8) rechtwinklig von der Basis (5) erstrecken und jeder Arm (7, 8) mindestens ein Durchgangsloch (9, 10) aufweist, die Basis, die einen vorspringenden flachen Abschnitt hindurch aufweist, ist definiert eine jeweilige durchgehende Öffnung und das Verbindungsmittel, das einen Bolzen (11, 12) umfasst, der jeweils in einem jeweiligen Loch jedes der Arme eingreifen kann und einen Gewindeendeabschnitt aufweist, um in eine entsprechende Sperrmutter einzugreifen.

3. Verfahren nach Anspruch 1, **dadurch gekennzeichnet, dass** jedes der aufrechten Elemente (M) aus einem flachen laminaren Streifenelement aus demselben Gummi wie der Luftreifen (P) besteht und eine Höhe aufweist, die wesentlich größer ist als eine Breite des Luftreifens (P), und die angepasst ist, durch jeweilige Schrauben und Mutter mit der Außenwand jeder der U-förmigen hohlen Rippen verschraubt zu werden.

4. Verfahren nach Anspruch 1, **dadurch gekennzeichnet, dass** das Verfahren direkt auf den Kochschritt I) folgend einen weiteren Schritt umfasst, auf die verarbeitete Seitenwand des Luftreifens (P) ein Drahtwulstelement anzubringen, das durch ein jeweiliges Eisendrahtelement befestigt werden soll.

5. Verfahren nach einem der vorhergehenden Ansprüche, **dadurch gekennzeichnet, dass** das Verfahren ferner nach dem Kochschritt einen weiteren Biegeschritt des Biegens von mindestens der oberen Seitenkante des Luftreifens (P) umfasst.

6. Vorrichtung zum Ausführen des Verfahrens nach Anspruch 1, **dadurch gekennzeichnet, dass** die Vorrichtung funktional verbunden mehrere Betriebseinheiten umfasst, die jeweils entfernbare tragende Mittel für den Luftreifen (P), Einstell- und Messmittel, Druckmittel (1, 2, 3, 4, P1, P2, P3, P4), Erhitzungs- und/oder Kochofenmittel, Entlademittel und Verpackungsmittel zum Verpacken der Parallelepipeden Schalungen, die so hergestellt werden, enthalten.

7. Vorrichtung nach Anspruch 6, **dadurch gekennzeichnet, dass** die Luftreifentragemittel ein Korbtrommelelement (C) umfassen, das eine oktogonale Konfiguration aufweist, mit der Zentrierungs- und Messmittel des Luftreifens und der Druckmittel (1, 2, 3, 4, P1, P2, P3, P4) operativ assoziiert sind, wobei die Druckmittel (1, 2, 3, 4, P1, P2, P3, P4), die durch den Korb (C) getragen werden, angepasst sind, um mindestens vier Abschnitte des der Luftreifenlauffläche, die in Paaren diametral gegenüberliegend angeordnet sind, zu pressen.

8. Vorrichtung nach Anspruch 6 und 7, **dadurch gekennzeichnet, dass** die Bedienungseinheiten online angeordnet und verbunden sind und gestapelt sind, wodurch sie Korb- oder Trommelspalten- (C) Einheiten zum Tragen der Luftreifen (P) formen.

9. Schalungsstruktur mit quadratischem Querschnitt, hergestellt aus einem gebrauchten Luftreifen (P) nach dem Verfahren nach Anspruch 1 bis 5, und durch die Vorrichtung nach Anspruch 6 bis 8, **dadurch gekennzeichnet, dass** die Schalungsstruktur ein Gummischalungsgehäuse umfasst, das im Wesentlichen steif hergestellt ist und Mittel zum Ermöglichen einer Stapelung mehrerer der Schalungen und deren verriegelbarer Koppelung.

10. Baukonstruktion, Eingrenzung oder Abschnittswand, Böschung, Damm, erosionsbeständige und erdbebensichere Fundamenten, jeweils enthaltend mehrere Schalungsstrukturen nach Anspruch 9, die operativ miteinander verbunden sind und mit einem inerten Material mit hohem Gewicht gefüllt sind.

## Revendications

1. Procédé pour fabriquer des modules de coffrage parallélépipédiques de section transversale carrée pour bâtiments de construction, murs de soutènement, remblais, barrages, fondations anti-érosion et antisismiques, en partant de pneumatiques usagés, **caractérisé en ce que** ledit procédé comprend au moins les étapes suivantes :
a) la fourniture d'un pneumatique usagé (P) provenant à la fois d'un remplacement périodique de pneus usés ou de rebuts de l'industrie du caoutchouc ou de la récupération de pneumatiques usagés ;
b) le retrait des deux talons en fer des flancs desdits pneumatiques (P) ;
c) la réalisation d'entailles (T1, T2, T'1, T'2, T3, T4, T'3, T'4) au niveau de positions diamétralement opposées sur les bords, lesdites entailles définissant des zones entaillées séparées par une zone médiane pleine (T5) des flancs de pneu ;
d) le montage de façon amovible dudit pneumatique (P) sur un moyen de support de type panier-tambour (C);
e) la compression, dans des directions diamétrales vers un centre dudit pneumatique (P), des parties de bande de roulement dudit pneumatique près desdites entailles en faisant ainsi en sorte que ledit pneu adopte une configuration parallélépipédique de section transversale carrée ;
f) la compression des zones d'angle de ladite configuration carrée vers le centre dudit pneumatique et simultanément la poursuite de ladite étape de compression en définissant de la sorte, au niveau desdites entailles, des nervures creuses en forme de U s'étendant sensiblement à travers la largeur totale dudit pneumatique (P), d'un flanc à l'autre flanc dudit pneumatique (P) ;
g) la fourniture d'une pluralité d'éléments de blocage (5, 6, 7, 8, 9, 10, 11, 12) pour bloquer les bras de chaque dite nervure creuse en forme de U et de moyens de raccordement connexes ;
h) la fourniture d'une pluralité correspondante d'éléments plats dressés lamellaires (M) ;
i) le blocage des bras de chaque dite nervure creuse en forme de U et simultanément le blocage, sur chaque paroi externe de chacun desdits bras des deux parois de chaque dite nervure creuse en forme de U, d'une paire respective desdits éléments dressés (M) ;
l) l'introduction du pneumatique (P) ayant adopté ladite configuration parallélépipédique, et supporté par ledit moyen de support (C), dans un four de chauffe et/ou de cuisson
m) le retrait du pneumatique (P) dudit four et le refroidissement de celui-ci pour définitivement fixer ladite configuration parallélépipédique.

2. Procédé selon la revendication 1, **caractérisé en ce que** chaque dit élément de blocage pour bloquer les bras de chaque dite nervure creuse en forme de U comprend un élément métallique de pont en forme de U (5) ayant une base à plaques d'un seul tenant (6) avec deux bras de plaque (7, 8) s'étendant perpendiculairement à partir de ladite base (5), chaque dit bras (7, 8) ayant au moins un trou traversant (9, 10), ladite base ayant une partie plate saillante à travers laquelle est définie une ouverture traversante respective, et lesdits moyens de raccordement comprenant un boulon (11, 12), chacun pouvant être mis en prise dans un trou respectif de chaque dit bras et ayant une partie d'extrémité filetée pour une mise en prise avec un écrou de blocage correspondant.

3. Procédé selon la revendication 1, **caractérisé en ce que** chaque dit élément dressé (M) se compose d'un élément de bande lamellaire plate constitué par un même caoutchouc dudit pneumatique (P) et ayant une hauteur sensiblement supérieure à une largeur dudit pneumatique (P), et chacun étant adapté pour être bloqué par des boulons et écrous respectifs sur la paroi externe de chaque dite nervure creuse en forme de U.

4. Procédé selon la revendication 1, **caractérisé en ce que** ledit procédé comprend, immédiatement à la suite de ladite étape de cuisson I), une autre étape d'application au flanc traité dudit pneumatique (P) d'un élément de fil d'acier de tringle adapté pour être fixé par un élément de fil de fer respectif.

5. Procédé selon l'une quelconque des revendications précédentes, **caractérisé en ce que** ledit procédé comprend en outre, après ladite étape de cuisson, une autre étape de pliage consistant à plier au moins le bord latéral supérieur dudit pneumatique (P).

6. Appareil pour mettre en oeuvre le procédé selon la revendication 1, **caractérisé en ce que** ledit appareil comprend, de façon intercouplée fonctionnellement, une pluralité d'unités opérationnelles comprenant chacune des moyens de support amovibles pour ledit pneumatique (P), des moyens de réglage et de mesure, des moyens de compression (1, 2, 3, 4, P1, P2, P3, P4), des moyens de four de chauffe et de cuisson, des moyens de refroidissement, des moyens de déchargement et des moyens d'emballage pour l'emballage du coffrage parallélépipédique ainsi réalisé.

7. Appareil selon la revendication 6, **caractérisé en ce que** lesdits moyens de support de pneumatique comprennent un élément de type panier-tambour (C) ayant une configuration octogonale, auxquels sont associés de manière opérative des moyens de centrage et de mesure dudit pneumatique et lesdits moyens de compression (1, 2, 3, 4, P1, P2, P3, P4), lesdits moyens de compression (1, 2, 3, 4, P1, P2, P3, P4) supportés par ledit panier (C) étant adaptés pour comprimer au moins quatre parties de ladite bande de roulement de pneumatique, disposées diamétralement en opposition par paires.

8. Appareil selon les revendications 6 et 7, **caractérisé en ce que** lesdites unités opérationnelles sont disposées et interconnectées en ligne et empilées en formant ainsi des unités de colonnes de paniers ou tambours (C) pour supporter lesdits pneumatiques (P).

9. Structure de coffrage à section transversale carrée, formée à partir d'un pneumatique usagé (P) grâce au procédé selon les revendications 1 à 5 et grâce à l'appareil selon les revendications 6 à 8, **caractérisée en ce que** ladite structure de coffrage comprend un corps de coffrage en caoutchouc rendu sensiblement rigide et des moyens pour faciliter un empilage de la pluralité desdits coffrages et leur couplage blocable.

10. Bâtiment de construction, endiguement ou soutènement, remblai, barrage, fondations anti-érosion et antisismiques, comprenant chacun(e) une pluralité de structures de coffrage selon la revendication 9 qui sont intercouplées fonctionnellement les unes avec les autres et remplies par un matériau inerte d'un poids élevé.
